# EUROPEAN PATENT SPECIFICATION

(11) **EP 3 480 027 B1**
(45) Date of publication and mention of the grant of the patent: **23.09.2020**
(21) Application number: 17820343.6
(22) Date of filing: 30.06.2017
(51) Int. Cl.: B42D 25/30, G02B 5/28, G09F 3/02, B42D 25/324

(54) **DISPLAY BODY, AND ARTICLE PROVIDED WITH DISPLAY BODY**
ANZEIGEKÖRPER UND ARTIKEL MIT DEM ANZEIGEKÖRPER
CORPS D'AFFICHAGE ET ARTICLE DOTÉ D'UN CORPS D'AFFICHAGE

(30) Priority: 30.06.2016 JP 2016130381; 29.11.2016 JP 2016231478
(43) Date of publication of application: 08.05.2019
(60) Divisional application: 20189138.9
(73) Proprietor: Toppan Printing Co., Ltd., Tokyo 110-0016 (JP)
(72) Inventor: ENDO, Hiroyuki, Tokyo 110-0016 (JP)
(74) Representative: Hoffmann Eitle
(86) International application number: PCT/JP2017/024225
(87) International publication number: WO 2018/003989

(56) References cited:
- EP-A1- 2 508 922
- EP-A1- 2 790 042
- JP-A- 2012 230 183
- JP-A- 2012 237 887
- JP-A- 2014 238 465
- JP-A- 2016 080 963
- US-A1- 2010 177 390

## Description

### [Technical Field]

The present invention relates to a display that can be used to, for example, prevent counterfeiting, and to an article including the display.

### [Background Art]

Securities, such as gift vouchers or checks, cards, such as credit cards, cash cards, or ID cards, and certificates, such as passports or driver's licenses, typically have a display adhered thereto that has visual effects different from those of normal printed matter to prevent counterfeiting of these articles. In recent years, the circulation of counterfeits is also a social problem for articles other than those mentioned above, and similar anti-counterfeiting techniques are increasingly applied to these articles.

A known display having visual effects different from those of normal printed matter includes a diffraction grating with aligned grooves. This display, for example, displays an image that changes according to the observation conditions, or displays a stereoscopic image. In addition, iridescent colors produced by a diffraction grating cannot be produced by normal printing techniques. Therefore, a display including a diffraction grating is widely used for an article that requires anti-counterfeiting measures.

PTL1, for example, discloses a technique for displaying a picture by arranging plural diffraction gratings in which grooves have different longitudinal directions or lattice constants (i.e., groove pitches). As the position of the observer or light source relative to the diffraction gratings changes, the wavelength of the diffracted light reaching the observer's eyes changes. Therefore, the abovementioned technique enables the representation of an image that changes to show iridescent colors.

In a display that employs a diffraction grating, a relief diffraction grating (grating lines) formed of plural grooves is typically used. The relief diffraction grating is usually reproduced from an original plate made by photolithography.

PTL 1 discloses a method for manufacturing an original plate of a relief diffraction grating. This method involves placing a plate-like substrate having one main surface coated with a photosensitive resist on an XY stage, and pattern-exposing the photosensitive resist by irradiating it with an electron beam while moving the stage under computer control. The original plate of the diffraction grating can also be formed using two-beam interference of laser light.

In the manufacture of a relief diffraction grating, an original plate is usually formed using such a method, and a metal stamper is produced therefrom by electroforming or the like. This metal stamper is then used as a matrix to replicate a relief diffraction grating. That is, for example, a thermoplastic resin or a photocurable resin is first applied onto a thin, film or sheet-like transparent substrate made of polyethylene terephthalate (PET) or polycarbonate (PC). Then the coating is brought into close contact with the metal stamper, and the resin layer is applied with heat or light in this state. After the resin is cured, a replica of the relief diffraction grating is obtained by releasing the metal stamper from the cured resin.

Typically, the relief diffraction grating is transparent. Usually, therefore, a reflective layer is formed on the resin layer provided with a relief structure by depositing a metal such as aluminum or a dielectric in a single layer or multiple layers by vapor deposition.

The display thus obtained is then adhered via an adhesive layer or pressure-sensitive adhesive layer to a support substrate made of, for example, paper or plastic film. An anti-counterfeiting display is thus obtained.

The original plate used for manufacturing the display including the relief diffraction grating is difficult to manufacture. Furthermore, the relief structure needs to be transferred from the metal stamper to the resin layer with high accuracy. That is, advanced technology is required for manufacturing a display including a relief diffraction grating.

However, as many articles requiring anti-counterfeiting measures employ displays including relief diffraction gratings, this technique has come to be widely known, and the numbers of counterfeits has been increasing. Therefore, it has become increasingly difficult to achieve a sufficient anti-counterfeiting effect with a display that is characterized only by exhibiting iridescence due to diffracted light.

Displays have been disclosed that have visual effects different from changes in iridescent colors due to a conventional diffraction grating. In a technique disclosed in PTL 2, for example, pixels including diffraction gratings are formed with different lattice constants, and the tones thereof are modulated by amplituide modulation to express a full-color image.

### [Citation List]

### [Patent Literature]

[PTL 1] US 5058992 A
[PTL 2] JP H08-20563 A

### Disclosure of the Invention

However, the manufacturing method for such a display has the following problems.

First, since the colors emitted from the diffraction grating vary depending on the angle at which the colors intersect with the normal of the main surface of the display, different colors are provided depending on the elevation angle for observation and the distance between the display and the observer. Depending on these observation conditions, color expression may be different from that intended by a designer(s).

In addition, since the diffraction grating emits diffracted light in a direction perpendicular to the direction in which the grating extends, an intended image or even no image will be perceived by an observer from an azimuth angle different from that intended by the designer.

Document EP 2 790 042 A1 discloses a display according to the preamble of claim 1.

The present invention has been made in view of the above circumstances. An object of the present invention is to provide a display that exhibits a high anti-counterfeiting effect by expressing an image as intended, and an article including the display.

To achieve the above object, the present invention takes the following means.

That is, the invention is defined in claim 1.

The invention of claim 2 is the display according to claim 1, characterized in that each of the sub-pixels changes the saturation of the color to be displayed by changing the area ratio of the concavo-convex region to the reflective surface.

The invention of claim 3 is the display according to claim 1 or 2, characterized in that the first color is red, the second color is green, and the third color is blue.

The invention of claim 4 is the display according to any one of claims 1 to 3, characterized in that the length of the long side and the short side of the plural protrusions or recesses is 0.5 µm or more and 50 µm or less; in each of the sub-pixels, the average value of the center-to-center distances between adjacent ones of the protrusions or recesses is 0.6 µm or more and 110 µm or less, and the height of the protrusions or the depth of the recesses is 0.05 µm or more and 0.5 µm or less.

The invention of claim 5 is the display according to any one of claims 1 to 3, characterized in that the plural protrusions or recesses are extended in one direction and have a long side formed by this extension to have a length of 50 µm or more so as to provide an interference color in a specific direction.

The invention of claim 6 is the display according to any one of claims 1 to 3, characterized in that the concavo-convex region includes a sub-concavo-convex region in which the plural protrusions or recesses are extended in a first direction and a sub-concavo-convex region in which the plural protrusions or recesses are extended in a second direction different from the first direction so as to display images different in plural directions by providing interference colors in the plural directions.

The invention of claim 7 is an article including the display according to any one of claims 1 to 6.

According to the display of the present invention, since each color of the emitted light is not expressed by a diffraction grating, the color can be expressed as expected at a wide viewing angle with little change due to the reflection angle, that is, the elevation angle or the azimuth angle during observation. In addition, the hue and saturation can be changed by appropriately increasing or decreasing the area ratio of the concavo-convex region in the sub-pixel and the height or depth of protrusions and recesses. Thus, a clear full-color image can be expressed.

Furthermore, bonding together or combining such displays allows articles such as printed matter and cards to have a high anti-counterfeiting effect.

### [Brief Description of Drawings]

FIG. 1 is a schematic plan view of a display and pixels, according to the first embodiment.
FIG. 2 is a cross-sectional view of an example sub-pixel.
FIG. 3 is a perspective view showing an example of the configuration of a concavo-convex region on a reflective surface of a reflective layer.
FIG. 4 is a plan view showing an example of the arrangement of concavo-convex regions in sub-pixels.
FIG. 5 illustrates the relationship between the dosage of irradiated electron beams and the concavo-convex height.
FIG. 6 illustrates the relationship between the concavo-convex height and the hue emitted by the concavo-convex regions.
FIG. 7 illustrates the relationship between the hue emitted by the concavo-convex regions and the saturation.
FIG. 8 is a schematic plan view of an example article with a display.
FIG. 9 is a cross-sectional view of the article with a display, taken along the line X-X of FIG. 8.
FIG. 10 is a perspective view showing an example of the configuration of a concavo-convex region on a reflective surface of a reflective layer in a display, according to a second embodiment.
FIG. 11 is a perspective view of the display according to the second embodiment, illustrating the operation thereof.
FIG. 12 is a perspective view of the display according to the second embodiment, illustrating the operation thereof.
FIG. 13 is a partial plan view showing an example of the configuration of a concavo-convex region in a display according to a third embodiment.
FIG. 14 is a perspective view of the display according to the third embodiment, illustrating the operation thereof.
FIG. 15 is a perspective view of the display according to the third embodiment, illustrating the operation thereof.

### Description of the Preferred Embodiments

The embodiments of the present invention will be described in detail with reference to the drawings. Components that exhibit identical or similar functions are denoted by the same reference signs throughout the drawings, and redundant description thereof is omitted.

### [First Embodiment]

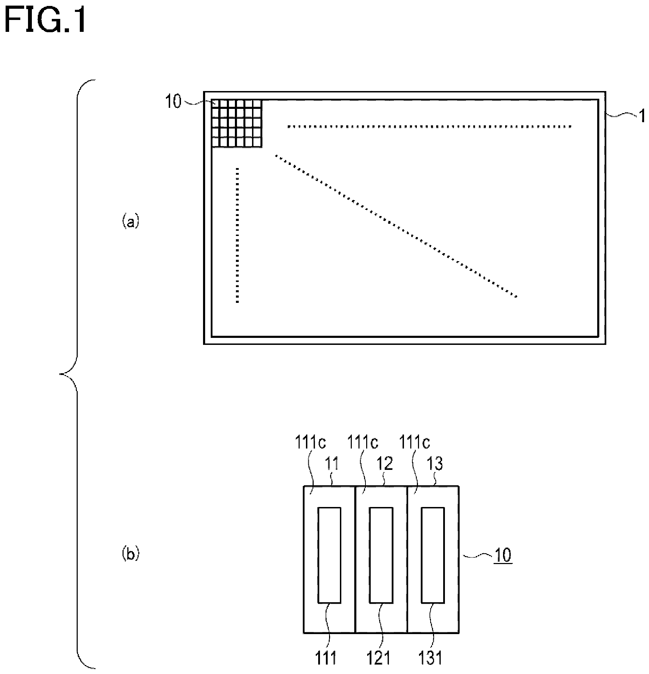

FIG. 1 is a schematic plan view of a display and a pixel according to a first embodiment of the present invention.

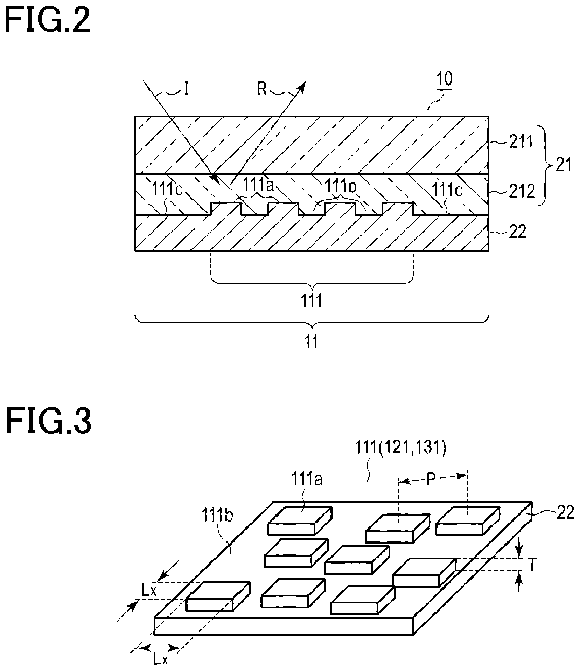

FIG. 2 is a cross-sectional view of an example sub-pixel.

That is, the display 1 according to this embodiment includes plural pixels 10. As illustrated in FIG. 1(a), the plural pixels 10 may be arranged in a grid pattern on a two-dimensional plane. As illustrated in FIG. 1(b), each pixel 10 includes a sub-pixel 11, a sub-pixel 12, and a sub-pixel 13. As illustrated in FIG. 2, which is a cross-sectional view of the sub-pixel 11, the sub-pixel 11 is a laminate in which a light-transmitting layer 21 and a reflective layer 22 are laminated. The light-transmitting layer 21 is formed by layering a transparent substrate 211 and a relief structure forming layer 212.

The pixels 10 may be arranged differently from the grid pattern illustrated in FIG. 1(a). The size (the length of the long side and the short side) of the pixel 10 is preferably 5 µm or more and 500 µm or less. The size (the length of the long side and the short side) of the sub-pixels 11, 12, and 13 is preferably 5 µm or more and 500 µm or less.

The transparent substrate 211 is a film or sheet that can be handled by itself, and, for example, polyethylene terephthalate (PET), polycarbonate (PC), or the like is suitable. The transparent base material 211 can have a thickness of, for example, 10 µm or more and 200 µm or less.

The relief structure forming layer 212 is a layer formed on a surface of the transparent substrate 211. As the relief structure forming layer 212, for example, a resin having light transparency, such as the thermoplastic resin, the thermosetting resin, or the photocurable resin, is suitable. By applying the thermoplastic resin or photocurable resin as the material of the relief structure forming layer 212, this makes it possible to form a light-transmitting layer 21 which has protrusions or recesses transferred onto one main surface from, for example, protrusions or recesses formed on a metal stamper.

As the thermoplastic resin, for example, a plastic such as the polyethylene resin or the polypropylene can be applied. As the thermosetting resin, the urethane resin, epoxy resin, or the like can be applied. As the photocurable resin, the acrylic resin, the urethane acrylic resin, or the like can be applied.

The relief structure forming layer 212 can have a thickness of 0.5 µm or more and 10 µm or less.

As the reflective layer 22, a metal layer of metal material is preferably applied. As the metal material, for example, aluminum, silver, gold, alloys thereof, or the like can be applied. Alternatively, the reflective layer 22 may be a dielectric layer having a refractive index different from that of the relief structure forming layer 212. Alternatively, the reflective layer 22 may be a laminate of dielectric layers having refractive indices different between adjacent ones thereof, that is, a dielectric multilayer film. Preferably, of the dielectric layers in the dielectric multilayer film, the one in contact with the relief structure forming layer 212 has a refractive index different from that of the relief structure forming layer 212. The reflective layer 22 can be formed by vapor deposition. Examples of the vapor deposition include, for example, vacuum deposition and sputtering. The reflective layer 22 can have a thickness of 10 nm or more and 1000 nm or less.

The sub-pixels 12 and 13 also have a configuration similar to that of the sub-pixel 11, and thus illustration and description thereof are omitted.

As shown in FIG. 2, the incident light I enters the pixel 10 including such sub-pixels 11, 12, and 13 from above in FIG. 2. The incident light I is reflected by the reflective layer 22, and is emitted as reflected light R.

The sub-pixel 11 includes a concavo-convex region 111 that emits red reflected light R. As shown in FIG. 2, the concavo-convex region 111 includes an upper surface (a surface on the light-transmitting layer 21 side) provided with plural protrusions 111a having a surface substantially parallel to the main surface of the display 1. The protrusions 111a are irregularly arranged in the concavo-convex region 111, and the region excluding the protrusions 111a is a flat portion 111b. The region around the concavo-convex region 111 on the upper surface (a surface on the light-transmitting layer 21 side) is a flat portion 111c substantially parallel to the main surface of the display 1, and there are no protrusions 111a in the flat portion 111 c. The upper surface of the protrusions 111a and the main surface of the display 1 may be substantially parallel such that there is no optical problem with visible light.

The sub-pixel 12 includes a concavo-convex region 121 that emits green reflected light R. The sub-pixel 13 includes a concavo-convex region 131 that emits blue reflected light R. Although not illustrated, the concavo-convex region 121 and the concavo-convex region 131 also include plural protrusions 111a, which have a plane substantially parallel to the main surface of the display 1, on the upper surface (a surface on the light-transmitting layer 21 side), similarly to the concavo-convex region 111. The concavo-convex region 121 and the concavo-convex region 111 of the concavo-convex region 131 also have irregularly arranged protrusions 111a, where the region excluding the protrusions 111a is the flat portion 111b.

The region around the concavo-convex regions 121 and 131 on the upper surface (a surface on the light-transmitting layer 21 side) is a flat portion 111c substantially parallel to the main surface of the display 1, and there are no protrusions 111a on the flat portion 111c.

The display 1 thus includes plural pixels 10 formed of a red sub-pixel 11, a green sub-pixel 12, and a blue sub-pixel 13, and this configuration allows the display 1 to display a color image by reflected light R. Therefore, the upper side in FIG. 2 corresponds to the front side (observer side), and the lower side in FIG. 2 corresponds to the back side.

FIG. 3 is a perspective view showing an example configuration of the concavo-convex region 111 on the reflective surface of the reflective layer 22. The configuration of the concavo-convex regions 121 and 131 will be similarly described with reference to FIG. 3. In this example, the observer side is the top side and corresponds to the light-transmitting layer 21 side in FIG. 2. For the sake of description, the light-transmitting layer 21 is omitted in the drawing.

As illustrated in FIG. 3, in the display 1 according to the embodiment of the present invention, the protrusions 111a are irregularly arranged in the concavo-convex regions 111, 121, and 131 on the upper surface of the reflective layer 22. Alternatively, instead of the protrusions 111a, recesses (not shown) may be irregularly arranged. The height T of the protrusions 111a (or the depth of the recesses) is set according to the color displayed by each of the sub-pixels 11, 12, and 13. For example, in the concavo-convex region 111 of the sub-pixel 11 for providing a red color, the height T is increased (or the depth of recesses is increased); in the concavo-convex region 131 of the sub-pixel 13 for providing a blue color, the height T is reduced (or the depth of recesses is reduced); and in the concavo-convex region 121 for providing a green color, the height T is in the middle range (or the depth of recesses is in the middle range).

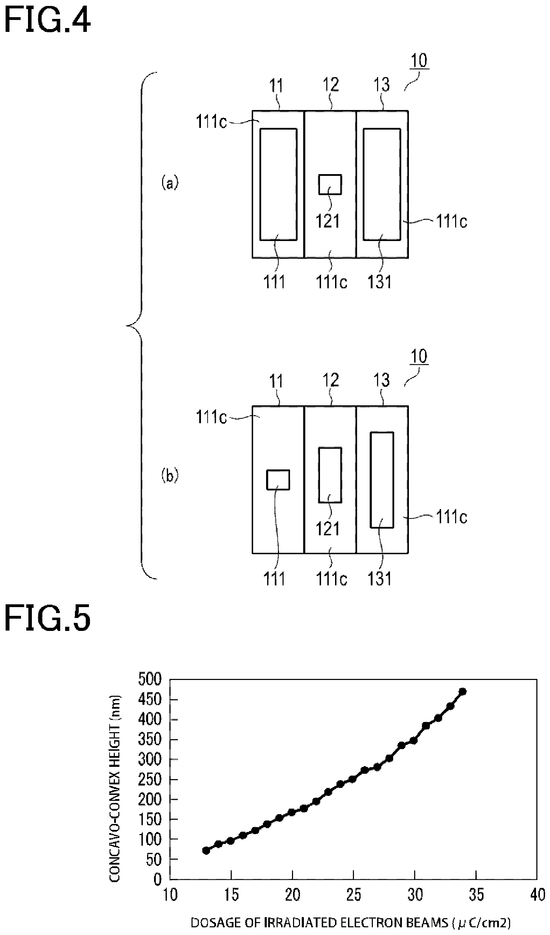

Furthermore, in each of the sub-pixels 11, 12, and 13, the ratio of the area occupied by the concavo-convex regions 111, 121, and 131 is set corresponding to the hue and saturation of the pixel 10. For example, as shown in FIG. 4(a), if the area ratio of the concavo-convex region 111 in the sub-pixel 11 is increased, the saturation of red can be increased. Similarly, if the area ratio of the concavo-convex region 131 in the sub-region 13 is increased, the saturation of blue can be increased. In addition, if the area ratio of the concavo-convex region 121 in the sub-region 12 is reduced, the saturation of green can be reduced. Thus, by increasing the saturation in the sub-pixels 11 and 13 and decreasing the saturation in the sub-pixel 12, the pixel 10 can emit a purple hue.

In addition, as shown in FIG. 4(b), the pixel 10 can emit cyan hue when the red saturation is lowered by reducing the area ratio of the concavo-convex region 111 in the sub-pixel 11, the blue saturation is increased by increasing the area ratio of the concavo-convex region 131 in the sub-pixel 13, and the green saturation is made medium by making the area ratio of the concavo-convex region 121 in the sub-pixel 12 medium.

The area ratio of the sub-pixels 11, 12, and 13 can be changed by changing both the long side and the short side of the sub-pixels 11, 12, and 13. Furthermore, the sub-pixels 11, 12, and 13 having a large area ratio can be produced by changing only the long sides of the sub-pixels 11, 12, and 13, and the sub-pixels 11, 12, and 13 having a small area ratio can be produced by changing both the long sides and the short sides of the sub-pixels 11, 12, and 13. In particular, with each of the sub-pixels 11, 12, and 13 having a certain area ratio or larger, the luminance and saturation may be modulated by dither diffusion for dark pixels.

Furthermore, as shown in FIG. 1(b), by providing the concavo-convex regions 111, 121, and 131 having a constant area ratio as adjusters in each of the sub-pixels 11, 12, and 13, the color shifting can be easily adjusted. Each of the sub-pixels 11, 12, and 13 may have the same area.

The sub-pixels 11, 12, and 13 may have a size that is not recognizable by the human eye. If the sub-pixels 11, 12, and 13 are of a size that cannot be recognized by the human eye, the location of the concavo-convex regions 111, 121, and 131 in the sub-pixels 11, 12, and 13 is less limited.

In addition, although a square is shown in FIG. 3 as a planar shape of a protrusion 111a or a recess (not shown), the planar shape thereof may be a rectangle, a polygon, a circle, or any other shape. Furthermore, the size and the planar shape of protrusions 111a or recesses (not shown) may be different in each of the concavo-convex region 111, 121, 131. With any planar shape, if the length Lx of one side (the length of the long side and the short side in the case of a rectangle) or the diameter in the case of a circle (the long diameter and the short diameter in the case of an elliptical shape) is smaller than 0.5 µm or larger than 50 µm, scattering necessary for distributing the reflected light R is less likely to be generated. Preferably, therefore, regardless of the planar shape of protrusions 111a or recesses (not shown), the outer diameter is typically about 1 µm.

At the area ratio of the protrusions 111a or recesses (not shown) in the concavo-convex regions 111, 121, and 131 of 50%, the intensity of color provided by the reflected light R is the strongest, and when the area ratio is 20% or less and 80% or more, sufficient color cannot be provided. Preferably, the center-to-center distance P between adjacent protrusions 111a or recesses (not shown) in each of the concavo-convex regions 111, 121, and 131 is 0.6 µm or more and 110 µm or less on average, depending on the intensity of the color, the size of the concavo-convex regions, and the size of the sub-pixels.

Although the typical configuration of the display 1 according to the present embodiment has been described, the display 1 of the present embodiment may be further provided with another layer such as an adhesive layer or a resin layer (not shown). Hereinafter, a configuration example in the case where the adhesive layer and the resin layer are provided will be described.

The adhesive layer is provided, for example, so as to cover the reflective layer 22. When the display 1 includes both the light-transmitting layer 21 and the reflective layer 22, the surface shape of the reflective layer 22 is substantially identical to the interface shape between the light-transmitting layer 21 and the reflective layer 22. The adhesive layer prevents exposure of the surface of the reflective layer 22, making it difficult for the concavo-convex regions 111, 121, 131 at the interface between the light-transmitting layer 21 and the reflective layer 22 to be copied for counterfeiting. When the light-transmitting layer 21 side is the back side and the reflective layer 22 side is the front side, such an adhesive layer is formed on the light-transmitting layer 21. As the material of the adhesive layer, the acrylic resin, the urethane resin, or the like can be applied. The adhesive layer can have a thickness of 1 µm or more and 30 µm or less.

The resin layer is, for example, provided as a hard coat layer for preventing the surface of the display 1 from being scratched during use, or provided as a print layer made of resin ink curable by light or heat and provided on a part of the display 1. Such a resin layer is provided on the front surface side of the laminate of the light-transmitting layer 21 and the reflective layer 22. For example, when the light-transmitting layer 21 side is the back side and the reflective layer 22 side is the front side, covering the reflective layer 22 with the resin layer prevents damage to the reflective layer 22 and makes it difficult to copy the concavo-convex regions 111, 121, 131 on the surface thereof for counterfeiting.

Next, a description will now be given of the principle that a wide viewing-angle full-color image can be displayed by the display 1 according to the present embodiment configured as described above. In the following description, "image" means something that can be observed as a spatial distribution of hue and/or saturation. In addition, it is understood that "image" includes photographs, figures, pictures, letters, symbols, and the like.

According to the display 1 of the present embodiment, as illustrated in FIG. 3, the protrusions 111a are irregularly arranged in the concavo-convex regions 111, 121, and 131. When natural light or illumination light having plural wavelengths is incident as the incident light I on the concavo-convex regions 111, 121, and 131 formed by such irregular arrangement of the protrusions 111a as described above, the reflected light R is scattered at any wavelength, so that the spatial distribution of each wavelength becomes substantially uniform in the direction of elevation angle and azimuth angle. In other words, the distribution of a particular wavelength will not vary with a particular angle (elevation angle and azimuth angle), as with the reflection of light on a known diffraction grating.

In addition, in the reflected light R on the upper surfaces of the concavo-convex regions 111, 121, and 131 as shown in FIG. 3, a phase difference occurs according to the height T of the protrusions 111a or the depth of protrusions (not shown). Therefore, these reflected lights R interfere with each other to provide a particular color at a certain height T or a depth of protrusions (not shown). In this case, for example, when the refractive index of the light-transmitting layer 21 is 1.5, which is the refractive index of a typical resin, and the viewing angle is 45 degrees, the angle of light inside the light-transmitting layer 21 is approximately 28 degrees according to Snell's law. The cosine of this angle gives a ratio of 0.88 between the height T of the protrusions 111a or the depth of the protrusions (not shown), in other words, the optical path length as viewed from the front, and the optical path length as viewed from an oblique direction at 45 degrees, and thus the shift amount is only 12% therebetween. The refractive index of the light-transmitting layer 21 can be 1.4 or more and 1.8 or less.

As described above, since the degree of interference due to the phase difference is close between a front view of the display 1 and a perspective view of the display 1, the provided colors are substantially the same across a wide angle, unlike the case where the diffraction grating color.

Furthermore, the spatial distribution of the reflective light in the protrusions 111a on the upper surface of the reflective layer 22 in the concavo-convex region 111 and the spatial distribution of the light reflected from the flat portion 111b except for the protrusions 111a are equal due to the Babinet's principle. Thus, since light and other light interfering with each other have the same spatial distribution, the intensity (efficiency) of interference is independent of the spatial direction, and the intensity of the mutual light is substantially the same across a wide angle, unlike the case of light from a diffraction grating.

As described above, with the display 1 according to the embodiment of the present invention, the provided color in a wide elevation angle and azimuth angle is substantially the same and has substantially the same intensity, and thus a full-color image having a wide viewing angle is displayed. As described above, the display 1 according to the embodiment of the present invention allows the display of a color image having a wide viewing angle, which does not depend on the elevation angle or the azimuth angle.

Furthermore, in the display 1 according to the embodiment of the present invention, in particular, the area ratio of the concavo-convex regions 111, 121, and 131 in each of the sub-pixels 11, 12, and 13 can be set corresponding to the hue and saturation of the color of the pixel 10. As a result, the following functions and effects can be achieved.

That is, according to such a configuration, it is possible to appropriately vary the area ratio of the color providing region included in the pixel 10, that is, the concavo-convex region 111, which emits red, to the sub-pixel 11, the area ratio of the concavo-convex region 121, which emits green, to the sub-pixel 12, and the area ratio of the concavo-convex region 131, which emits blue, to the sub-pixel 13. In other words, it is possible to adjust the color emission amount of red, green, and blue in the pixel 10. Thus, adjusting the mixing ratio of red, green, and blue allows other perceivable colors to be provided for each pixel 10 by color mixing, and allows the saturation to be adjusted for each pixel 10 based on the total amount of each color.

As described above, with the display 1 according to the embodiment of the present invention, the hue and saturation obtained can be adjusted, which makes it possible to more easily achieve a wide viewing-angle full-color image. Examples of such full-color images include historical sites or portraits. Historical sites and portraits are suitable as pictures when applied to articles. In addition, with the display 1 according to the embodiment of the present invention, a symbolic image can be formed as a full-color image, thus providing an impressive article. In the above description, as shown in FIGs. 2 and 3, the protrusions 111a are disposed on the upper surface of the reflective layer 22. However, a person skilled in the art would appreciate that the display 1 according to the present embodiment can achieve similar functions and effects even if recesses (not shown) are disposed on the upper surface of the reflective layer 22 instead of the protrusions 111a.

### (Example)

Details of a method for manufacturing a display as described above and characteristics of the display produced by the manufacturing method will now be described as Examples.

FIG. 5 illustrates the relationship between the dosage of irradiated electron beam and the height T of the protrusions 111a in the concavo-convex regions 111, 121, and 131 in the case where a commercially available electron beam resist (ZEP7000, manufactured by Nippon ZEON) is irradiated with an electron beam and immersed for development in diethyl malonate for 15 minutes.

FIG. 5 shows that the height T of the protrusions 111a can be adjusted by controlling the dosage of irradiated electron beams. The concavo-convex surface of the electron beam resist, which has protrusions and recesses formed by this adjustment, was subjected to nickel electroforming, to produce a nickel stamper having a thickness of 50 µm. The nickel stamper was pressure-bonded to a PET film coated with a photo-curable resin, and the photo-curable resin was cured by ultraviolet light, to form a light-transmitting layer 21. Lastly, a layer of aluminum was formed on the concavo-convex surface of the light-transmitting layer 21 to have a thickness of 50 nm using a vacuum deposition apparatus, to form a reflective layer 22.

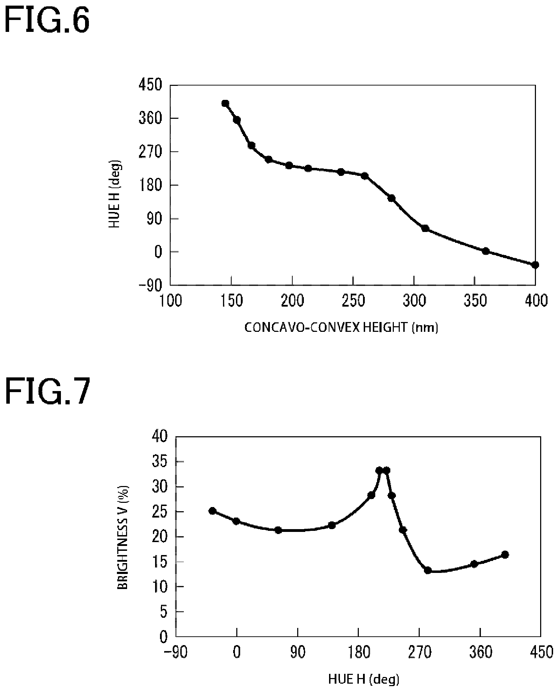

FIG. 6 illustrates measured hues with respect to the height T of the protrusions 111a in the sub-pixels 11, 12, and 13 having the reflective layer 22 formed as described above. In each of the sub-pixels 11, 12, and 13, rectangular protrusions 111a, each having a side of 1 µm, are irregularly arranged in the concavo-convex regions 111, 121, and 131 at an area ratio of 35%. Therefore, the concavo-convex height T, which is indicated on the horizontal axis in FIG. 6, corresponds to the height of the protrusions 111a in this case, but corresponds to the depth of recesses if these recesses are provided instead of the protrusions 111a on the surface of the reflective layer 22 on the light-transmitting layer 21 side.

The vertical axis in FIG. 6 represents the hue (H) in the HSV color system. In hue (H), red is 0 degrees or 360 degrees, green is 120 degrees, and blue is 240 degrees. In the present Example, the same hue appears repeatedly in circulation according to the height of the protrusions 111a. FIG. 6 shows that in the example configuration, red is obtained with the height of the protrusions 111a being approximately 150 nm or 360 nm. Similarly, green is obtained when the height of the protrusions 111a is approximately 280 nm, and blue is obtained when the height of the protrusions 111a is approximately 200 nm.

As described above, red is obtained with the height of the protrusions 111a being approximately 150 nm or 360 nm. As shown in FIG. 6, at hues of red obtained with the height of the protrusions 111a of 360 nm corresponding to the hue of 0 degrees, variations in color with respect to the variation in the concavo-convex height (processing error) are smaller, which can produce stable color.

Likewise, green and blue can also be obtained with the protrusions 111a having a greater height than the height of the protrusions 111a mentioned above. However, excessively tall protrusions 111a make transfer formation difficult. For this reason, the height of the protrusions 111a is preferably up to 0.5 µm, and thus 280 nm and 200 nm are adopted for green and blue, respectively.

The height of the protrusions 111a is set according to each color, and the range of the height can be provided within a range in which color shifting is tolerable. The allowable range of the color shifting may be based on a class D tolerance defined by JIS Z 8102 or a class C tolerance defined by JIS D 0202. In this case, the height of the protrusions 111a can be ±40 nm, more preferably ±20 nm, with respect to the abovementioned height.

When the height of the protrusions 111a is less than 0.05 µm, the phase difference to provide color (or to suppress non-target hues) is insufficient for any wavelength, so that a white screen will be displayed. Therefore, the minimum height of the protrusions 111a is preferably 0.05 µm.

From the results of FIGs. 5 and 6, the sub-pixel 11, which emits red light, was irradiated with an electron beam of 30 µC per square centimeter to form a concavo-convex region 111 with protrusions 111a having a height of approximately 360 nm; the sub-pixel 12, which emits green light, was irradiated with an electron beam of 27 µC per square centimeter to form a concavo-convex region 121 with protrusions 111a having a height of approximately 280 nm; and the sub-pixel 13, which emits blue light, was irradiated with an electron beam of 22 µC per square centimeter to form a concavo-convex region 131 with protrusions 111a having a height of approximately 200 nm.

FIG. 7 illustrates the relationship of the brightness (V of the HSV color system) to the hue of FIG. 6. In FIG. 7, the brightness is a little over 20% at the hue of 120 degrees, which provides green, and at the hue of 240 degrees, which provides blue. As described above, red is obtained when the hue is 0 degrees or 360 degrees. FIG. 7 shows that the brightness of red is a little over 20% similarly to the brightness when the hue is 0 degrees, whereas the brightness is approximately 15% when the hue is 360 degrees, thus deviating from the brightness of the other colors to become dark. Therefore, 0 degrees of hue is preferably adopted for red from the viewpoint of not only the stability of the hue described above but also the uniformity of the brightness.

A method for achieving a full-color image will now be described. First, an original image to be displayed is decomposed into pixels, and an average color for each pixel is obtained.
In this case, the size of the pixel is set to 0.3 mm in length × 0.3 mm in width, although a resolution of about 1 mm is sufficient at the maximum because the resolution of an image only needs to allow an observer to recognize that a set of pixels constitutes the image. The size of of the sub-pixel 11 for providing red, the sub-pixel 12 for providing green, and the sub-pixel 13 for providing blue, included in each of the pixels, was 0.3 mm in length × 0.1 mm in width, that is, 0.03 square millimeters.

The colors of the obtained pixels were then decomposed into 256 tones of red, green, and blue. For example, for the color light orange, red = 255, green = 183, and blue = 76.

Next, the areas of the concavo-convex region 111 for providing red, concavo-convex region 121 for providing green, and concavo-convex region 131 for providing blue, which are respectively included in the sub-pixel 11 for providing red, sub-pixel 12 for providing green, and sub-pixel 13 for providing blue, corresponded to the tones mentioned above. As a result, the area of the concavo-convex region 111 for emitting red was 255/255 × 0.03, that is, 0.030 square millimeters. The area of the concavo-convex region 121 for emitting green was 183/255 × 0.03, that is, approximately 0.022 square millimeters. The area of the concavo-convex region 131 for emitting blue was 76/255 × 0.03, that is, approximately 0.009 square millimeters.

All the pixels 10 were produced as above to enable the display 1 to display a full-color image of the original image.

### (Configuration of Article)

An article including a display 1 as described above will now be described.

The above-described display 1 can be adhered to printed matter or any other article via an adhesive or the like to, for example, prevent counterfeiting. As described above, the display 1 itself is difficult to counterfeit or fake. Therefore, when the display 1 is supported by an article, this article, which is authentic, is itself difficult to counterfeit or fake. Examples of an article include banknotes, cards, booklets, tags, seals, and the like.

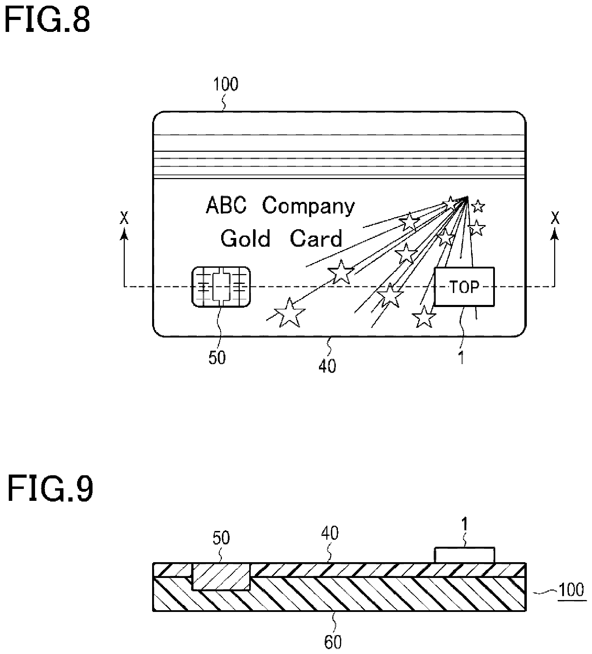

FIG. 8 is a schematic plan view of an example article with a display.

FIG. 9 is a cross-sectional view of the article with a display, taken along the line X-X of FIG. 8.

In FIGs. 8 and 9, printed matter 100 is depicted as an example of the article with a display. The printed matter 100 is an integrated circuit (IC) card and includes a support substrate 60. The support substrate 60 is made of, for example, plastic. One main surface of the support substrate 60 has a recess in which an IC chip 50 is fitted. The IC chip 50 has its surface provided with electrodes through which information is written in or read from an IC. A print layer 40 is formed on the support substrate 60. The display 1 described above is secured to a surface of the support substrate 60 on which the print layer 40 is formed via, for example, an adhesive layer. The display 1 is, for example, prepared as an adhesive sticker or a transfer foil, and is adhered to the print layer 40 so as to be secured to the support substrate 60.

Thus, the printed matter 100 includes the display 1, and is therefore difficult to counterfeit or fake. Furthermore, since the printed matter 100 includes the IC chip 50 and the print layer 40 in addition to the display 1, anti-counterfeiting measures using these components can be taken.

In FIGs. 8 and 9, an IC card is illustrated as an example of printed matter including the display 1, but this is not limiting. For example, the printed matter including the display 1 may be a magnetic card, a wireless card, or an identification (ID) card. Alternatively, the printed matter including the display 1 may be securities such as gift vouchers and stock certificates. Still alternatively, the printed matter including the display 1 may be a tag to be attached to an article that should be verified as authentic. Still alternatively, the printed matter including the display 1 may be a package or a part thereof for containing an article that should be verified as authentic.

In the printed matter 100 shown in FIGs. 8 and 9, the display 1 is adhered to the support substrate 60, but the display 1 may be supported by the support substrate 60 using other methods. For example, when paper is used as the support substrate 60, the display 1 may be embedded in the paper, and the paper may have an opening at a position corresponding to the display 1. Alternatively, if a light-transmitting material is used as the support substrate 60, the display 1 may be embedded therein, and the display 1 may be secured to the back surface of the support substrate 60, that is, a surface opposite to a display surface.

Furthermore, an article with a display is not limited to printed matter. That is, the display 1 may be supported by an article that does not include a print layer. For example, the display 1 may be supported by a luxury article such as an artwork.

### (Modification)

The display 1 according to the first embodiment of the present invention may be appropriately modified and implemented as follows.

The sub-pixels for providing colors may or may not include colors other than red, green, and blue. For example, in the case of a display composed of only red pixels, appropriately changing the saturation with the above-described method allows a red monotone image to be displayed.

It is known that a larger color gamut is obtained by adding a sub-pixel for providing yellow, cyan, or the like as a sub-pixel for providing a fourth color other than red, green, and blue. Since hues of yellow are 60 degrees, it can be understood from FIG. 6 that yellow can be provided by setting the height of protrusions 111a to approximately 310 nm. Since hues of cyan are 180 degrees, it can be understood from FIG. 6 that cyan can be provided by setting the height of protrusions 111a to approximately 270 nm.

By adding a sub-pixel for providing white as a sub-pixel that provides a fourth color other than red, green, and blue, it is possible to display an image with a bright impression by increasing the brightness. The color white can be provided by, for example, forming a shallow concavo-convex region or a concavo-convex region having uneven heights.

In addition, by making the flat portion 111c non-reflective or low reflective, a so-called black matrix can be formed to increase the contrast. Non-reflection or low reflection can be achieved by forming a so-called moth-eye structure on the flat portion 111c, or by printing or patterning black ink or black resist on the flat portion 111c after transfer formation.

### [Second Embodiment]

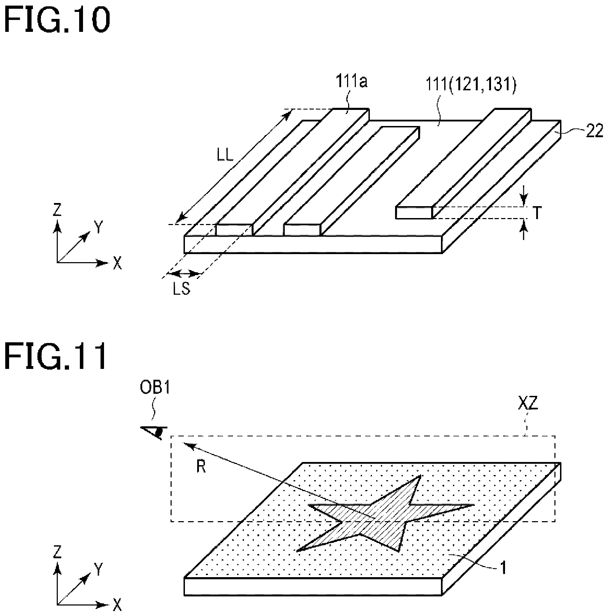

A second embodiment will be described with reference to FIGs. 10 to 12. A display according to the second embodiment differs from the display according to the first embodiment described above in the shape of protrusions and recesses that form a concavo-convex surface. Such a difference will now be described in detail; the same reference signs as those in the first embodiment are assigned to the same configurations as those in the first embodiment, and detailed description thereof is omitted.

As illustrated in FIG. 10, in the display 1 according to the second embodiment, the protrusions 111a are extended in the Y direction and are arranged irregularly in the X direction in the concavo-convex region 111, the concavo-convex region 121, and the concavo-convex region 131 on the upper surface of the reflective layer 22. Each of the protrusions 111a may have a different length of the long side L_{L} or a different length of the short side L_{S}. In FIG. 10, recesses (not shown) may be disposed instead of the protrusions 111a. The height T of the protrusions 111a (or the depth of the recesses) is set according to the colors displayed by the sub-pixel 11, sub-pixel 12, and sub-pixel 13.

As shown in FIG. 11, when an observer observes the display 1 from the direction OB1 parallel to the XZ plane, the reflected light R is scattered by the protrusions 111a, which are irregularly arranged in the X direction, at a wide elevation angle in the direction parallel to the XZ plane, so that the interference light is emitted. As described in the first embodiment, the interference color provided in this manner is substantially the same at a wide elevation angle.

In cases where an image of the display 1 is constituted by the sub-pixel 11 for providing red, sub-pixel 12 for providing green, and sub-pixel 13 for providing blue, each including such protrusions 111a, a full-color image of high visibility can be visually recognized from the direction OB1 at a wide elevation angle, similarly to the case described in the first embodiment.

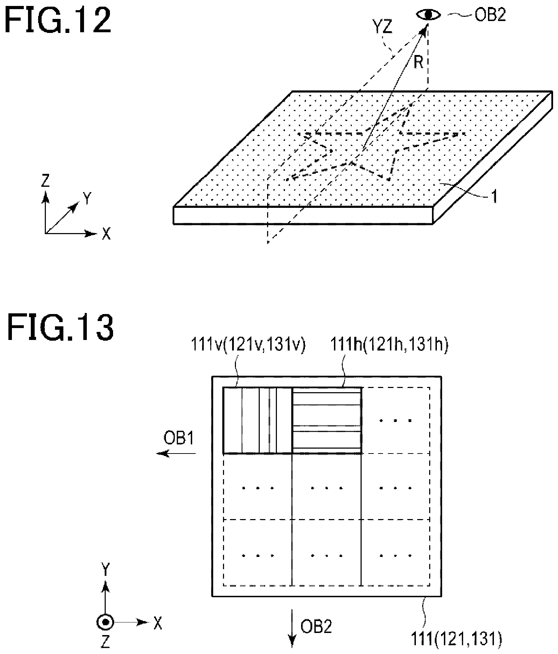

In contrast, when the observer observes the display 1 from the direction OB2 parallel to the YZ plane as shown in FIG. 12, the reflected light R is not scattered by the protrusions 111a, so that light other than the specular reflected light is not emitted in the direction OB 2, and thus the image is generally concealed.

As described above, according to the display of the second embodiment, a full-color image can be visually recognized at a wide elevation angle in the direction OBI, while the image is concealed in the direction OB2. Therefore, the visual effect of the display 1 on the observer is further enhanced and counterfeiting of the display 1 is more difficult than in the case of displaying an image in all directions.

"Extended" as used herein means that the long side L_{L} of the protrusions 111a is extended to 50 µm or more. When the length in the Y direction is 50 µm or more, scattering is less likely to occur in the Y direction, and interference light is less likely to be emitted in the direction OB2, thus ensuring concealment of the image. In the first embodiment, the length Lₓ of one side is set to 50 µm or less. In the second embodiment, the length of the short side L_{S} is preferably 10 µm or less. In this case, a greater amount of light is distributed in the direction OB than in the direction OB2, thereby increasing the directivity (directional dependency) and improving the visibility of the image.

### [Third Embodiment]

A third embodiment will be described with reference to FIGs. 13 to 15. In the display of the second embodiment, only a single extension direction is considered for the protrusions or recesses constituting the concavo-convex surface, whereas in a display of the third embodiment, plural extension directions are considered for the protrusions or recesses constituting the concavo-convex surface. Such a difference will now be described in detail; the same reference signs as those in the first and second embodiments are assigned to the same configurations as those in the first and second embodiments, and detailed description thereof is omitted.

FIG. 13 is a partial plan view showing an example of the configuration of a concavo-convex region 111 in the display according to the third embodiment. The configuration of concavo-convex regions 121 and 131 will be similarly described with reference to FIG. 13.

The concavo-convex region 111 includes both a sub-concavo-convex region 111v in which protrusions 111a are extended in the Y direction and are arranged irregularly in the X direction, and a sub-concavo-convex region 111h in which protrusions 111a are extended in the X direction and are arranged irregularly in the Y direction. As described in the second embodiment, the sub-concavo-convex region 111v having the protrusions 111a extending in the Y direction and arranged irregularly in the X direction emit interference light scattered in the direction OB1 parallel to the XZ plane.

Similarly, the sub-concavo-convex region 111h having the protrusions 111a extending in the X direction and arranged irregularly in the Y direction emit interference light scattered in the direction OB2 parallel to the YZ plane.

As described in the first embodiment, the interference color thus provided is substantially the same at a wide elevation angle. Here, the height T of the protrusions 111a (or the depth of recesses) in the sub-concavo-convex region 111v and the sub-concavo-convex region 111h is set according to the color displayed by the sub-pixel 11.

Similarly, the height T of protrusions 111a (or the depth of recesses) in the sub-concavo-convex region 121v and the sub-concavo-convex region 121h is set according to the color displayed by the sub-pixel 12, and the height T of protrusions 111a (or the depth of recesses) in the sub-concavo-convex region 131v and the sub-concavo-convex region 131h is set according to the color displayed by the sub-pixel 13.

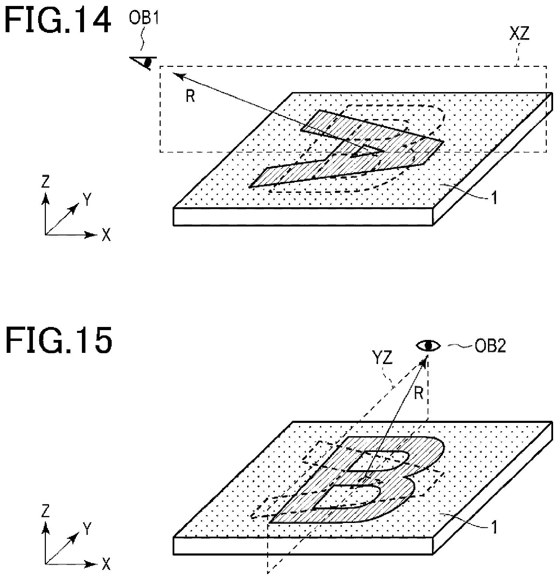

FIGs. 14 and 15 illustrate the operation of the display 1 according to the third embodiment. FIG. 14 illustrates an example where an image showing the alphabet "A" is displayed in the direction OBI, while FIG. 15 illustrates an example where an image showing the alphabet "B" is displayed in the direction OB2. The reason why these different images can be displayed in different directions will be described below.

FIG. 14 illustrates a case where the observer observes the display 1 from the direction OB1. When an image showing the alphabet "A" is constituted by the sub-pixel 11 for providing red, sub-pixel 12 for providing green, sub-pixel 13 for providing blue, which respectively include the sub-concavo-convex region 111v, sub-concavo-convex region 121v, and sub-concavo-convex region 131v, the display 1 emits interference colors due to scattering of reflected light in the direction OB1 at a wide elevation angle, so that the observer can visually recognize the full-color image. In this case, the sub concavo-convex region 111h, sub concavo-convex region 121h, and sub concavo-convex region 131h do not emit light other than specular reflection light, and thus do not contribute to the configuration of an image.

FIG. 15 illustrates a case where the observer observes the display 1 from the direction OB2. When an image showing the alphabet "B" is constituted by the sub-pixel 11 for providing red, sub-pixel 12 for providing green, sub-pixel 13 for providing blue, which respectively include the sub-concavo-convex region 111h, sub-concavo-convex region 121h, and sub-concavo-convex region 131h, the display 1 emits interference colors due to scattering of reflected light in the direction OB2 at a wide elevation angle, so that the observer can visually recognize the full-color image. In this case, the sub concavo-convex region 111v, sub concavo-convex region 121v, and sub concavo-convex region 131v do not emit light other than specular reflection light, and thus do not contribute to the configuration of an image.

As described above, the display of the third embodiment can display a full-color image showing the alphabet "A" in the direction OBI, and display a full-color image showing the alphabet "B" in the direction OB2. As described above, since different full-color images can be visually recognized in different directions, the display of the third embodiment can further enhance the visual effect on the observer as compared with the case of displaying the same image in all directions or the case of displaying an image in only one direction, thus making it more difficult to counterfeit the display 1.

While the best mode for carrying out the present invention has been described with reference to the accompanying drawings, the present invention is not limited to such a configuration. It is understood that various changes and modifications can be made by those skilled in the art within the scope of the appended claims, and these changes and modifications also belong to the technical scope of the present invention.

Although described as being used for preventing counterfeiting, for example, the display 1 according to each embodiment of the present invention may be used for a purpose other than preventing counterfeiting. For example, the display 1 according to each embodiment of the present invention may also be used as toys, learning materials, decorative articles, or the like.

## Claims

1. A display (1) comprising plural pixels (10), **characterized in that**
each of the pixels includes a first sub-pixel (11), a second sub-pixel (12), and a third sub-pixel (13),
each of the sub-pixels (11, 12, 13) includes a concavo-convex region (111, 121, 131) on a reflective surface on which incident light is reflected, wherein plural protrusions (111a) or recesses are arranged irregularly in the concavo-convex region (111, 121, 131), **characterised in that**
in the first sub-pixel (11), the plural protrusions (111a) or recesses arranged in the concavo-convex region (111) each have a first height or depth configured to display a first color,
in the second sub-pixel (12), the plural protrusions or recesses arranged in the concavo-convex region (121) each have a second height or depth configured to display a second color, and
in the third sub-pixel (13), the plural protrusions or recesses arranged in the concavo-convex region (131) each have a third height or depth configured to display a third color, wherein
the area ratio of the protrusions (111a) or recesses in the concavo-convex region (111, 121, 131) is 20-80%.

2. The display (1) according to claim 1, **characterized in that** each of the sub-pixels (11, 12, 13) changes saturation of the color to be displayed by changing an area ratio of the concavo-convex region (111, 121, 131) to the reflective surface.

3. The display (1) according to claim 1 or 2, **characterized in that** the first color is red, the second color is green, and the third color is blue.

4. The display (1) according to any one of claims 1 to 3, **characterized in that** a length of a long side and a short side of the plural protrusions (111a) or recesses is 0.5 µm or more and 50 µm or less, the height (T) of the protrusions or the depth of the recesses is 0.05 µm or more and 0.5 µm or less, and in each of the sub-pixels (11, 12, 13), an average value of center-to-center distances (P) between adjacent ones of the protrusions (111a) or recesses is 0.6 µm or more and 110 µm or less.

5. The display (1) according to any one of claims 1 to 3, **characterized in that** the plural protrusions (111a) or recesses are extended in one direction and have a long side formed by this extension to have a length of 50 µm or more so as to provide an interference color in a specific direction.

6. The display (1) according to any one of claims 1 to 3, **characterized in that** the concavo-convex region (111, 121, 131) includes a sub-concavo-convex region in which the plural protrusions or recesses are extended in a first direction and a sub-concavo-convex region in which the plural protrusions or recesses are extended in a second direction different from the first direction so as to display images different in plural directions by providing interference colors in the plural directions.

7. An article including the display (1) according to any one of claims 1 to 6.

## Patentansprüche

1. Display (Anzeige) (1), das mehrere Pixel (10) umfasst, **dadurch gekennzeichnet, dass**
jeder der Pixel einen ersten Unter-Pixel (11), einen zweiten Unter-Pixel (12) und einen dritten Unter-Pixel (13) einschließt,
jeder der Unter-Pixel (11, 12, 13) einen konkav-konvexen Bereich (111, 121, 131) auf einer reflektierenden Oberfläche, an der einfallendes Licht reflektiert wird, einschließt, wobei mehrere Vorsprünge (111a) oder Rücksprünge in dem konkav-konvexen Bereich (111, 121, 131) unregelmäßig angeordnet sind, **dadurch gekennzeichnet, dass**
in dem ersten Unter-Pixel (11) die mehreren Vorsprünge (111a) oder Rücksprünge, die in dem konkav-konvexen Bereich (111) angeordnet sind, jeweils eine erste Höhe oder Tiefe haben, die konfiguriert ist, eine erste Farbe darzustellen,
in dem zweiten Unter-Pixel (12) die mehreren Vorsprünge oder Rücksprünge, die in dem konkav-konvexen Bereich (121) angeordnet sind, jeweils eine zweite Höhe oder Tiefe haben, die konfiguriert ist, eine zweite Farbe darzustellen, und
in dem dritten Unter-Pixel (13) die mehreren Vorsprünge oder Rücksprünge, die in dem konkav-konvexen Bereich (131) angeordnet sind, jeweils eine dritte Höhe oder Tiefe haben, die konfiguriert ist, eine dritte Farbe darzustellen, wobei
das Flächenverhältnis der Vorsprünge (111a) oder Rücksprünge in dem konkav-konvexen Bereich (111, 121, 131) 20 bis 80 % ist.

2. Display (1) gemäß Anspruch 1, **dadurch gekennzeichnet, dass** jeder der Unter-Pixel (11, 12, 13) die Sättigung der darzustellenden Farbe ändert, indem ein Flächenverhältnis des konkav-konvexen Bereichs (111, 121, 131) zu der reflektierenden Oberfläche geändert wird.

3. Display (1) gemäß Anspruch 1 oder 2, **dadurch gekennzeichnet, dass** die erste Farbe rot ist, die zweite Farbe grün ist und die dritte Farbe blau ist.

4. Display (1) gemäß mindestens einem der Ansprüche 1 bis 3, **dadurch gekennzeichnet, dass** die Länge einer langen Seite und einer kurzen Seite der mehreren Vorsprünge (111a) oder Rücksprünge 0,5 µm oder mehr und 50 µm oder weniger ist, die Höhe (T)der Vorsprünge oder die Tiefe der Rücksprünge 0,05 µm oder mehr und 0,5 µm oder weniger ist und in jedem der Unter-Pixel (11, 12, 13) der Mittelwert der Abstände (P) von Mitte zu Mitte zwischen benachbarten Vorsprüngen (111a) oder Rücksprüngen 0,6 µm oder mehr und 110 µm oder weniger ist.

5. Display (1) gemäß mindestens einem der Ansprüche 1 bis 3, **dadurch gekennzeichnet, dass** sich die mehreren Vorsprünge (111a) oder Rücksprünge in einer Richtung erstrecken und eine durch diese Erstreckung gebildete lange Seite haben, um eine Länge von 50 µm oder mehr aufzuweisen und so eine Interferenzfarbe in einer spezifischen Richtung zu liefern.

6. Display (1) gemäß mindestens einem der Ansprüche 1 bis 3, **dadurch gekennzeichnet, dass** der konkav-konvexe Bereich (111, 121, 131) einen konkav-konvexen Unter-Bereich, in dem sich die mehreren Vorsprünge oder Rücksprünge in einer ersten Richtung erstrecken, und einen konkav-konvexen Unter-Bereich, in dem sich die mehreren Vorsprünge oder Rücksprünge in einer zweiten Richtung verschieden von der ersten Richtung erstrecken, einschließt, um so in mehrere Richtungen verschiedene Bilder darzustellen, indem Interferenzfarben in den mehreren Richtungen geliefert werden.

7. Artikel, der das Display (1) gemäß mindestens einem der Ansprüche 1 bis 6 enthält.

## Revendications

1. Corps d'affichage (1) comprenant plusieurs pixels (10), **caractérisé en ce que**
chacun des pixels inclut un premier sous-pixel (11), un deuxième sous-pixel (12) et un troisième sous-pixel (13),
chacun des sous-pixels (11, 12, 13) inclut une région concavo-convexe (111, 121, 131) sur une surface réfléchissante sur laquelle de la lumière incidente est réfléchie, dans lequel plusieurs saillies (111a) ou creux sont agencé(e)s de manière irrégulière dans la région concavo-convexe (111, 121, 131), **caractérisé en ce que**
dans le premier sous-pixel (11), les plusieurs saillies (111a) ou creux agencé(e)s dans la région concavo-convexe (111) présentent chacun(e) une première hauteur ou profondeur configurée pour afficher une première couleur,
dans le deuxième sous-pixel (12), les plusieurs saillies ou creux agencé(e)s dans la région concavo-convexe (121) présentent chacun(e) une deuxième hauteur ou profondeur configurée pour afficher une deuxième couleur, et
dans le troisième sous-pixel (13), les plusieurs saillies ou creux agencé(e)s dans la région concavo-convexe (131) présentent chacun(e) une troisième hauteur ou profondeur configurée pour afficher une troisième couleur, dans lequel
le rapport de superficies des saillies (111a) ou creux dans la région concavo-convexe (111, 121, 131) est de 20 à 80 %.

2. Corps d'affichage (1) selon la revendication 1, **caractérisé en ce que** chacun des sous-pixels (11, 12, 13) change une saturation de la couleur devant être affichée en changeant un rapport de superficies de la région concavo-convexe (111, 121, 131) par rapport à la surface réfléchissante.

3. Corps d'affichage (1) selon la revendication 1 ou 2, **caractérisé en ce que** la première couleur est rouge, la deuxième couleur est vert, et la troisième couleur est bleu.

4. Corps d'affichage (1) selon l'une quelconque des revendications 1 à 3, **caractérisé en ce qu'**une longueur d'un côté long et d'un côté court des plusieurs saillies (111a) ou creux est de 0,5 µm ou plus et 50 µm ou moins, la hauteur (T) des saillies ou la profondeur des creux est de 0,05 µm ou plus et 0,5 µm ou moins, et dans chacun des sous-pixels (11, 12, 13), une valeur moyenne de distances de centre à centre (P) entre des adjacent(e)s parmi les saillies (111a) ou creux est de 0,6 µm ou plus et 110 µm ou moins.

5. Corps d'affichage (1) selon l'une quelconque des revendications 1 à 3, **caractérisé en ce que** les plusieurs saillies (111a) ou creux sont étendu(e)s dans une direction et présentent un côté long formé par cette extension pour présenter une longueur de 50 µm ou plus de manière à fournir une couleur d'interférence dans une direction spécifique.

6. Corps d'affichage (1) selon l'une quelconque des revendications 1 à 3, **caractérisé en ce que** la région concavo-convexe (111, 121, 131) inclut une sous-région concavo-convexe dans laquelle les plusieurs saillies ou creux sont étendu(e)s dans une première direction et une sous-région concavo-convexe dans laquelle les plusieurs saillies ou creux sont étendu(e)s dans une seconde direction différente de la première direction de manière à afficher des images différentes dans plusieurs directions en fournissant des couleurs d'interférence dans les plusieurs directions.

7. Article incluant le corps d'affichage (1) selon l'une quelconque des revendications 1 à 6.
